# EUROPEAN PATENT APPLICATION

(11) **EP 2 719 356 A1**
(43) Date of publication of application: **16.04.2014**
(21) Application number: 13188388.6
(22) Date of filing: 11.10.2013
(51) Int. Cl.: A61C 3/00

(54) **Dental bur and method for removing a soft deposit**

(30) Priority: 11.10.2012 US 201261712514 P; 15.03.2013 US 201313832604
(71) Applicant: KerrHawe S.A., 6934 Bioggio (CH); UNIVERSITY OF ZURICH, 8006 Zürich (CH)
(72) Inventor: Schmidlin, Patrick R., 8635 Dürnten (CH); Da Rold, Marco, 6951 Odogno (CH); Kilcher, Beat, 6935 Bosco Luganese (CH)
(74) Representative: Findlay, Alice Rosemary

(57) **Abstract**

A dental bur (10) and method for removing a soft deposit from a tooth or an implant, the bur (10) having a shank (14) adapted to be connected to a rotary device (20). A head (12) extends from the shank (14). The head (12) has a material hardness adapted to remove soft deposits attached to the tooth but deflect against the tooth. Furthermore, the head (12) is sized for insertion into a periodontal pocket (66) adjacent to the tooth without surgery. Thus, the dental bur (10) may be rotated against the tooth for removing the soft deposits but deflect and/or wear against the tooth for preventing damage to the tooth.

## Description

The present invention relates generally to a dental bur and method for use in dentistry and, more particularly, to a dental bur and method for removing a soft deposit from a tooth or implant.

Soft deposits, such as biofilm and dental plaque, are well understood in dentistry to create or aggravate dental diseases of the tooth and gingival tissues. While the reduction of biofilm may, to some extent, be accomplished with proper care, portions of the teeth and gingival tissues may be inaccessible for routine maintenance. For example, subgingival areas, such as a periodontal pocket adjacent to the tooth, routinely collect biofilm-generating bacteria. Over time, these inaccessible biofilms mineralize into a calculus or tartar that promotes the growth of additional biofilms. As biofilms continue to grow, so too does the risk of infection and tissue inflammation associated with tooth and gingival diseases.

Traditional treatments performed for subgingival biofilm removal include scaling and root planing of the tooth within the subgingival area for removing the calculus on which the biofilms are prone to collect. A dentist, periodontist, or other qualified professional practitioner performs these treatments. Instruments frequently used in these treatments include curettes, ultrasonic devices, and rotating or oscillating diamond coated instruments. On one hand, mechanical treatments applying rotating or oscillating instruments require surgery at the infected subgingival location to form a flap of gingival tissue to gain access to the periodontal pocket. On the other hand, ultrasonic devices create excessive noise during the treatment and result in increased tooth sensitivity for some period of time after the treatment. In any case, these traditional treatments are relatively painful for the patient and tend to damage the surface of the tooth.

Scaling and root planing treatments generally remove the biofilm from the subgingival area accessed with the above instruments. Unfortunately, these treatments are known to leave nearly 30% of the calculus remaining on the tooth. While the remaining calculus is not a pathological agent known to cause infection and tissue inflammation, this remaining calculus continues to collect biofilm following the treatment. Thus, additional scaling and root planing maintenance may be required to prevent further infection and encourage healing of the adjacent tissue. The maintenance treatments create additional pain and/or sensitivity for the patient.

According to an exemplary embodiment, a dental bur for non-surgical removal of a soft deposit from a tooth adjacent to a periodontal pocket comprises a shank and a head. The shank has a proximal end portion and a distal end portion. The proximal end portion of the shank is adapted to be connected to a rotary device for rotating the shank. The head extends from the distal end portion of the shank. The head is sized for insertion into the periodontal pocket without surgery. In addition, the head has a material hardness adapted to remove the soft deposit from the tooth when rotatably driven, but deflect and/or wear upon impact with the tooth for preventing damage to the tooth.

According to another exemplary embodiment, a dental bur for non-surgical removal of the soft deposit from a dental implant tooth having a screw thread adjacent to the periodontal pocket comprises a shank and a head. The shank has a proximal end portion and a distal end portion. The proximal end portion is adapted to be connected to a rotary device. The head extends from the distal end portion of the shank. The head has a tip that is generally rounded and distally positioned from the shank. The head also has a protrusion defining a channel that extends along the head. Furthermore, the head has a material hardness adapted to remove the soft deposit from the implant tooth when the head is rotatably driven, but deflect and/or wear upon impact with the implant tooth for preventing damage to the implant tooth.

In use, the dental bur is rotated and inserted into the periodontal pocket without surgery. The dental bur impacts the soft deposit while rotating to separate the soft deposit from the tooth. However, the dental bur also deflects and/or wears against the tooth for preventing damage to the tooth. In the event that the tooth is the implant tooth with the screw thread, at least a portion of the head is rotated between the screw thread.

The invention will now be further described by way of example with reference to the accompanying drawings, in which:

FIG. 1 is a perspective view of a first embodiment of a dental bur.

FIG. 2 is a front view of the dental bur of FIG. 1.

FIG. 3 is a cross-section view of FIG. 2 taken along section line 3-3.

FIG. 4 is a top view of the dental bur of FIG. 1.

FIG. 5 is a cross-section view of FIG. 4 taken along section line 5-5.

FIG. 6 is a section view of a natural tooth adjacent to a periodontal pocket engaged by the dental bur according to FIG. 1.

FIG. 7 is a perspective view of a second embodiment of a dental bur.

FIG. 8 is a front view of the dental bur of FIG. 7.

FIG. 9 is a top view of the dental bur of FIG. 7.

FIG. 10 is a cross-section view of FIG. 9 taken along section line 10-10.

FIG. 11 is a front view a third embodiment of a dental bur.

FIG. 12 is a top view of the dental bur of FIG. 11.

FIG. 13 is a cross-section view of FIG. 12 taken along section line 13-13.

FIG. 14 is a front view of a fourth embodiment of a dental bur.

FIG. 15 is a top view of the dental bur of FIG. 14.

FIG. 16 is a cross-section view of FIG. 15 taken along section line 16-16.

FIG. 17 is a section view of an implant tooth adjacent to a periodontal pocket engaged by the dental bur according to FIG. 7.

FIG. 18 is a section view of an implant tooth adjacent to a periodontal pocket engaged by the dental bur according to FIG. 11.

FIG. 19 is a section view of an implant tooth adjacent to a periodontal pocket engaged by the dental bur according to FIG. 14.

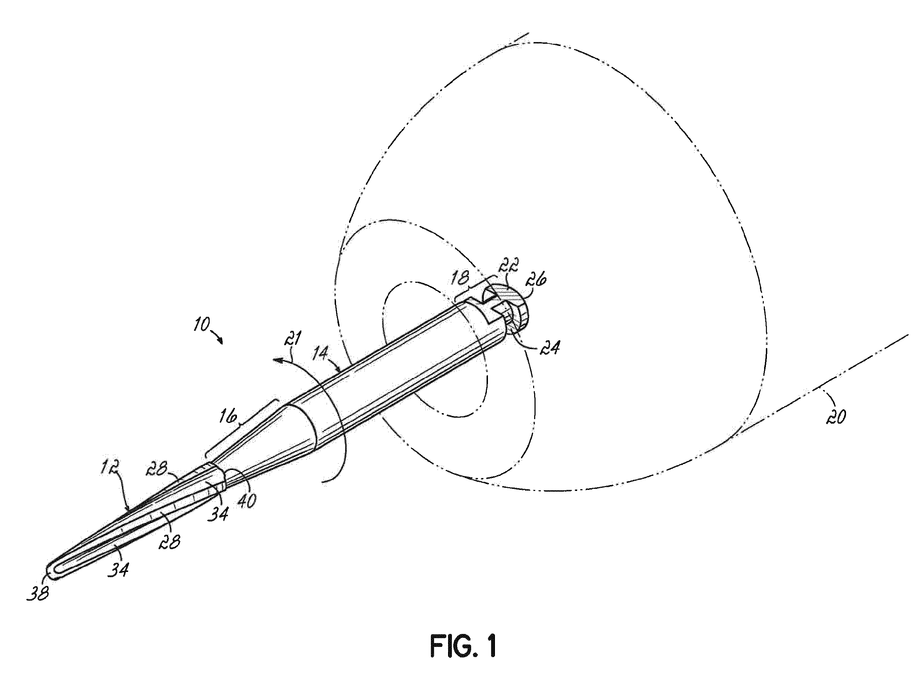

With reference to FIG. 1, a first embodiment of a dental bur 10 is shown for removing a soft deposit, such as a biofilm, from a tooth. The biofilm is particularly removed from a subgingival area of a natural tooth without generally damaging a surface of the natural tooth or surrounding gingival tissues. The dental bur 10 includes a head 12 extending from a shank 14. According to an exemplary embodiment, the head 12 and the shank 14 are formed as a unitary dental bur 10. However, it will be appreciated that the dental bur 10 may also be formed from two or more pieces assembled into the dental bur 10, for example, the head 12 may be rigidly connected to the shank 14. In any case, the shank 14 has a distal end portion 16 adjacent to the head 12 and a proximal end portion 18. The proximal end portion 18 is adapted for being connected to a rotary device 20. More particularly, a practitioner may removably connect the proximal end portion 18 to the rotatory device 20 for replacing the dental bur 10, as desirable. For example, known rotary devices 20, such as dental drills or similar devices presently used by practitioners, may be connected to the dental bur 10 for rotating the shank 14 and head 12 clockwise from the perspective of the practitioner, as shown by arrow 21 for removing soft deposits.

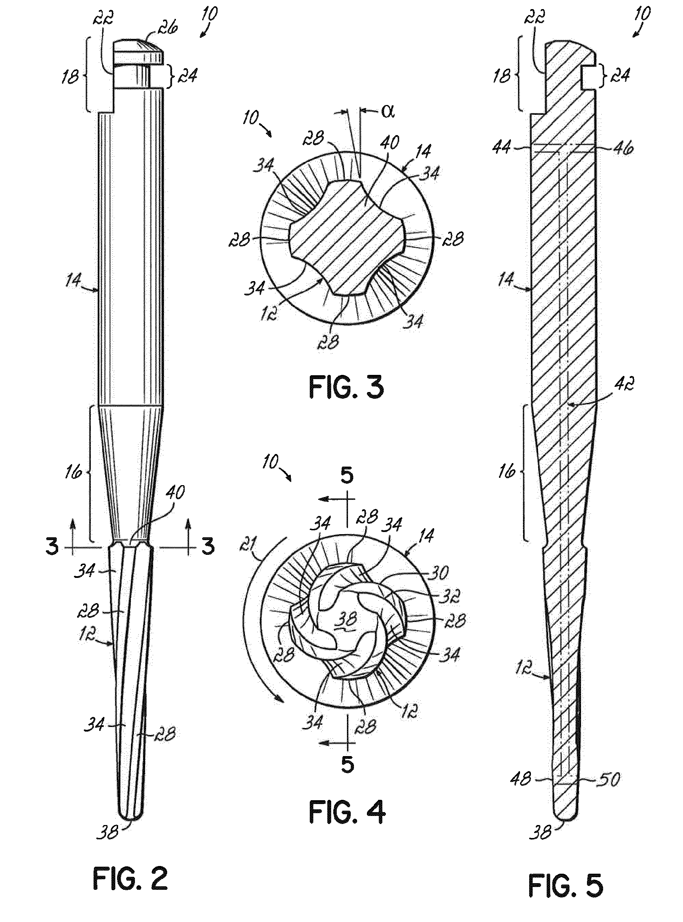

FIGS. 1 and 2 show the proximal end portion 18 of the dental bur 10 having a generally planar surface 22 and an annular groove 24. The generally planar surface 22 extends longitudinally along the shank 14 and is positioned offset from the longitudinal center of the dental bur 10. The annular groove 24 circumscribes at least a portion of the proximal end portion 18 and extends around the shank 14 to the generally planar surface 22. Taken together, the generally planar surface 22 and the annular groove 24 define an end collar 26. The end collar 26 is adapted to be removably connected to the rotary device 20 for fastening the dental bur 10 along the longitudinal direction by gripping the dental bur 10 at the annular groove 24. Similarly, the generally planar surface portion 22 is adapted to be engaged by the rotary device 20 for rotating the dental bur 10. Thus, the dental bur 10 is connected to the rotary device 20 in a sufficiently rigid, stable, and rotatable position for rotating the dental bur 10 in order to remove soft deposits. During operation, the rotary device 20 may rotate the head 12 between 600 rotations per minute (rpm) and 6000 rpm. Specifically, the rotary device 20 operatively rotates the head 12 at generally 2000 rpm.

The distal end portion 16 of the shank 14 tapers toward the head 12. The head 12, shown in FIGS. 2, 3 and 4, generally includes a plurality of protrusions 28 positioned along the head 12. More particularly, each protrusion 28 includes a leading edge 30 and a trailing edge 32 defined by the intended direction of rotation. Given that the intended direction of rotation of an exemplary embodiment is clockwise from the practitioner's perspective, the leading edge 30 is positioned further clockwise than the trailing edge 32 on each protrusion 28. Furthermore, the plurality of protrusions 28 define a plurality of channels 34. Each channel 34 is positioned between a pair of the protrusions 28 and is generally concave in shape.

Generally, the plurality of protrusions 28 and plurality of channels 34 have a cutting angle extending along the leading and trailing edges 30, 32. The cutting angle is the angle between the face of one of the protrusions 28 and the surface of the tooth. The cutting angle, exaggerated for exemplary purposes, is indicated by the cutting angle α as shown in FIG 3. Generally, the cutting angle α is not aggressive. According to an exemplary embodiment, the cutting angle α of the dental bur 10 is between negative ten degrees and positive forty-five degrees. Particularly, the cutting angle α may range between positive ten degrees to negative ten degrees. More particularly, the cutting angle α may range between positive five degrees to negative five degrees. Although, according to an exemplary embodiment, the cutting angle α is generally zero degrees. However, it will be appreciated that the cutting angle, rake and clearance angles, and depth of the channels 34, may vary depending on the specific function. In any case, the head 12 does not slice, cut, drill, or otherwise damage the natural tooth or gingival tissue. The head 12 proximally transitions to a tip 38 from the protrusions 28 and channels 34. Similar to the leading and trailing edges 30, 32, the tip 38 is generally free of aggressive cutting angles prone to cut, slice, drill, or otherwise damage the natural tooth or gingival tissue. Accordingly, the tip 38 is generally rounded and smooth as it transitions toward the remainder of the head 12.

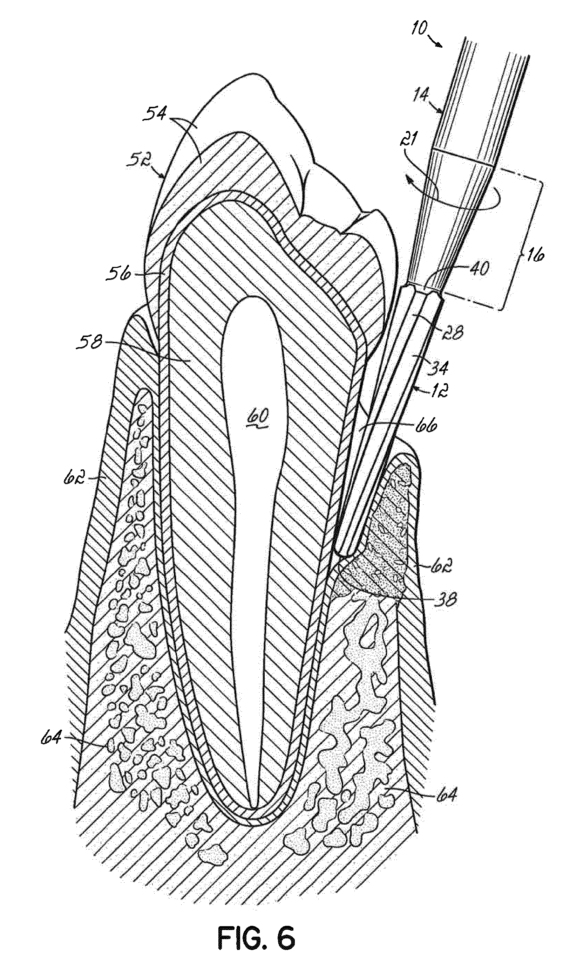

The dental bur 10, according to an exemplary embodiment, includes four protrusions 28 and four channels 34. The head 12 includes the tip 38 and a base 40. These protrusions 28 and channels 34 extend longitudinally from the tip 38 to the base 40. More particularly, the channels 34 are in the form of helical flutes that, in conjunction with the protrusions 28, appear twisted about the head 12 from the tip 38 to the base 40. The head 12 also tapers from the base 40 to the tip 38. However, it will be appreciated that various shapes may be used to define the overall shape of the head 12 depending on the application. For example, the head 12 may, in the alternative, be generally conical, concave, convex, or barrel-shaped. Generally, though, the head 12 may be any appropriate size adapted to insert into a periodontal pocket 66 (see FIG. 6) without surgery. Thus, according to an exemplary embodiment, the head 12 has an outermost diameter of generally less than 2.5 mm. With respect to the tapering, the head 12 has an outermost diameter of generally between 0.5 mm and 2.5 mm. More particularly, the outermost diameter of the head 12 is about 0.8 mm with the tip 38 having an approximate diameter of generally 1.6 mm and the base 40 having an approximate diameter of generally 1.4 mm.

The dental bur 10 is formed from a plastic material configured to have sufficient hardness to break up and remove soft deposits, such as biofilm, but deflect upon impact with the natural tooth. Thereby, the surface of the natural tooth remains generally intact over the course of regular maintenance treatments, while preventing pain and natural tooth sensitivity to the patient. In one embodiment, the material may be a sterolithographic resin, i.e., a photopolymer curable by ultraviolet radiation, and has an elongation at yield of generally 3% or greater, an elongation at break of generally 15%, a tensile strength at break of generally 50 MPa or greater, and an elastic modulus of generally 1500 MPa or greater. Suitable plastics include those that are medical grade and usable in stereolithography. Further, suitable plastics are capable of being injection molded and can be filled with active components, such as antibacterial substances. The hardness of the material is between the hardness of biofilm and the hardness of the natural tooth. More particularly, the material hardness is between Rockwell R 70 and Rockwell R 130. According to an exemplary embodiment, the material hardness of the head 12 is generally about Rockwell R 120. For example, one such plastic having the above material properties is Somos® WaterShed™ XC 11122. According to an exemplary embodiment, the dental bur 10 is unitary and may be injection molded from a plastic that includes additional active components such as fluoride, chlorhexidine, silver ions, or any other antibacterial substance. As the dental bur 10 wears during controlled use, these active components may be released to further inhibit the infection and inflammation of gingival tissue.

In one embodiment, the dental bur 10 is a plastic material configured to have sufficient hardness to break up and remove soft deposits, such as a biofilm, but wear upon impact with the natural tooth. Thereby, similar to deflecting as discussed above, the surface of the natural tooth remains generally intact, while preventing pain and natural tooth sensitivity. Such a dental bur 10 may be formed from polyactide (PLA) material with a slow release mechanism for releasing a prophylactic agent incorporated therein. While removing the soft deposits, the PLA dental bur 10 will wear onto the natural tooth and release the prophylactic agent directly on the natural tooth. Over time, the PLA debris adhered to the natural tooth will degrade, leaving only the natural tooth. In another embodiment, the dental bur 10, more particularly the shank 14, is formed from transparent plastic to allow the transmission of a laser beam (not shown) through the dental bur 10. When combined with blue dye, the practitioner may simultaneously remove the soft deposits with the dental bur 10 while providing a photodynamic treatment. While the exemplary embodiment of the dental bur 10 is formed entirely of plastic, it will be appreciated that the dental bur 10 may be formed of other components and assemblies, so long as a portion of the dental bur 10 for contacting the natural tooth is formed from some material having the above-described material properties. It will be further appreciated that the plastic material may be configured to deflect, wear, or deflect and wear against the natural tooth.

FIG. 5 shows an optional fluid conduit 42. The fluid conduit 42 extends longitudinally within the dental bur 10 from the proximal end portion 18 of the shank 14 to the head 12. First and second inlets 44, 46 extend transversely to the fluid conduit 42 within the shank 14, while first and second outlets 48, 50 extend transversely to the fluid conduit 42 within the head 12. The inlets 44, 46 are in fluid communication with the outlets 48, 50 for delivering fluid to the site of treatment at the head 12. The inlets 44, 46 are fluidly connected to the rotary device 20 (see FIG. 1) or another device for delivering fluid to the dental bur 10 via a right angle attachment (not shown). Examples of fluids that may be delivered to the treatment site via the fluid conduit 42 include physiologic or bacteriostatic solutions for immediate and/or simultaneous cleaning of the removed soft deposits. In addition to or alternatively, the dental bur 10 may also be used with an implant paste for cleaning and polishing presently manufactured by Sybron Dental Specialties Inc.

FIG. 6 shows a cross-section of a natural tooth 52 having enamel 54, cementum 56, dentin 58, and pulp 60. The natural tooth 52 is rooted in gingival tissues such as a gum 62 and bone 64. Furthermore, the gum 62 may be pulled away from the cementum 56 to reveal the subgingival area, such as the periodontal pocket 66 between the natural tooth 52 and gum 62. In use, the tip 38 of the dental bur 10 is inserted into the periodontal pocket 66 and positioned against the cementum 56 without surgery. The dental bur 10, more particularly the head 12, is rotated within the periodontal pocket 66 against the natural tooth 52. While rotating, the head 12 impacts the soft deposits, including biofilm, breaks apart the soft deposits on the natural tooth 52, and removes the soft deposits from the natural tooth 52. However, as the head 12 impacts the cementum 56, the material of the head 12 deflects and/or wears so to preserve the cementum 56. Furthermore, the distal end portion 16 of the shank 14 is tapered for improving access and movement of the head 12 within the periodontal pocket 66.

In one embodiment, the dental bur 10 may also include the fluid conduit 42 (see FIG. 5). In this case, the fluid is flushed through the dental bur 10 and into the periodontal pocket 66 to further treat and remove the biofilm and other soft deposits. In any case, the biofilm and other soft deposits and fluid associated with the treatment are moved proximally along the head 12, through the plurality of channels 34, and expelled from the periodontal pocket 66. Finally, the dental bur 10 is moved and rotated around the natural tooth 52 throughout the periodontal pocket 66 as needed to remove the biofilm and other soft deposits. This treatment may be repeated periodically over days, weeks, or months to treat and prevent infection and tissue inflammation associated with the buildup of soft deposits with minimal pain and sensitivity to the patient.

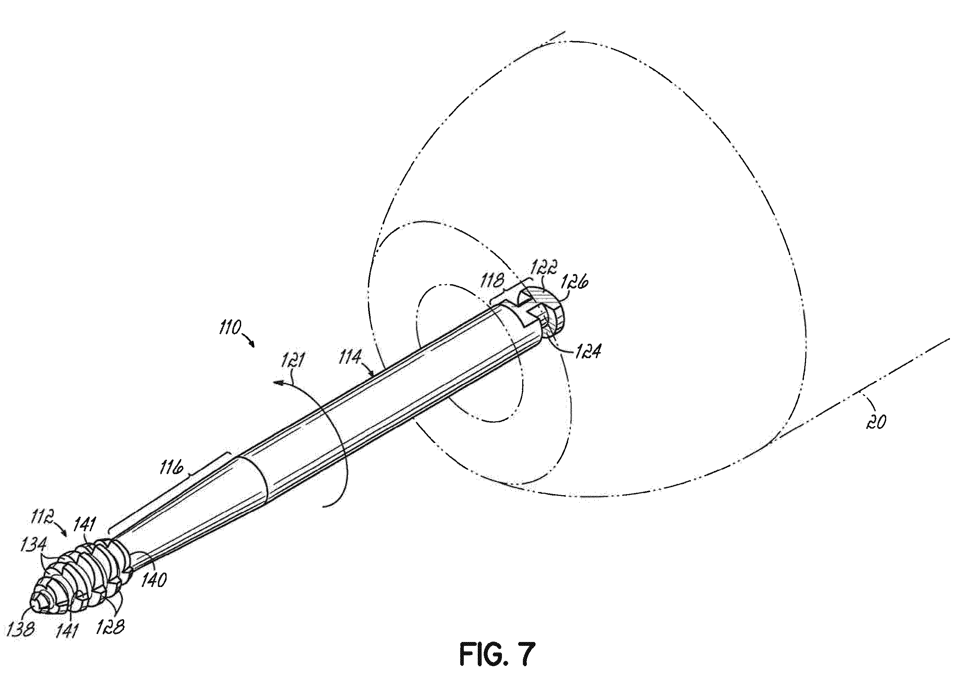

With reference to FIG. 7, a second embodiment of a dental bur 110 is shown for removing a soft deposit, such as a biofilm, from a tooth. The biofilm is particularly removed from a subgingival area of an implant tooth without generally damaging a surface of the implant tooth. The dental bur 110 includes a head 112 extending from a shank 114. According to an exemplary embodiment, the head 112 and the shank 114 are formed as a unitary dental bur 110. However, it will be appreciated that the dental bur 110 may also be formed from two or more pieces assembled into the dental bur 110, for example, the head 112 may be rigidly connected to the shank 114. In any case, the shank 114 has a distal end portion 116 adjacent to the head 112 and a proximal end portion 118. The proximal end portion 118 is adapted for being connected to the rotary device 20. More particularly, a practitioner may removably connect the proximal end portion 118 to the rotary device 20 for replacing the dental bur 110, as desirable. For example, known rotary devices 20, such as dental drills or similar devices presently used by practitioners, may be connected to the dental bur 110 for rotating the shank 114 and head 112 clockwise from the practitioner's perspective, as shown by the arrow 121 for removing soft deposits.

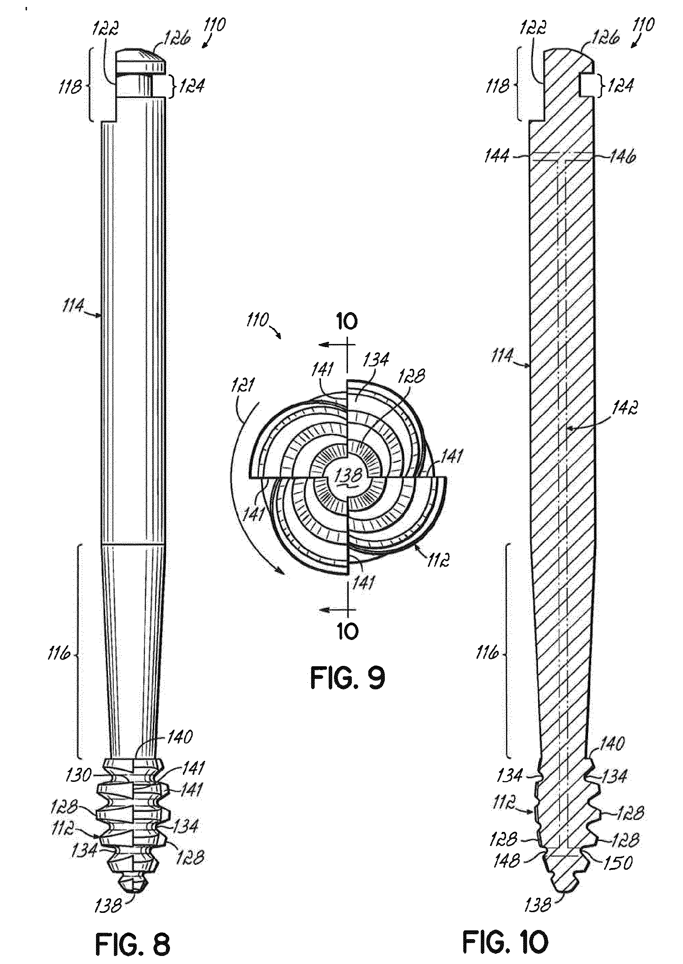

FIGS. 7 and 8 show the proximal end portion 118 of the dental bur 110 having a generally planar surface 122 and an annular groove 124. The generally planar surface 122 extends longitudinally along the shank 114 and is positioned offset from the longitudinal center of the dental bur 110. The annular groove 124 circumscribes at least a portion of the proximal end portion 118 and extends around the shank 114 to the generally planar surface 122. Taken together, the generally planar surface 122 and the annular groove 124 define an end collar 126. The end collar 126 is adapted to be removably connected to the rotary device 20 for fastening the dental bur 110 along the longitudinal direction by gripping the dental bur 110 at the annular groove 124. Similarly, the generally planar surface portion 122 is adapted to be engaged by the rotary device 20 for rotating the dental bur 110. Thus, the dental bur 110 is connected to the rotary device 20 in a sufficiently rigid, stable, and rotatable position for rotating the dental bur 110 in order to remove soft deposits. For example, the rotary device 20 may operatively rotate the head 112 generally between 600 rpm and 6000 rpm. Specifically, the rotary device 20 operatively rotates the head 112 generally about 2000 rpm.

The distal end portion 116 of the shank 114 tapers toward the head 112. The head 112, shown in FIGS. 8 and 9, generally includes a plurality of protrusions 128 positioned along the head 112. More particularly, each protrusion 128 includes at least one edge 130. Furthermore, the plurality of protrusions 128 define a plurality of channels 134. Each channel 134 is positioned between a pair of the protrusions 128 adjacent to the edge 130 and is generally concave in shape.

Generally, the plurality of protrusions 128 and plurality of channels 134 have a cutting angle extending along the edge 130 similar to that of cutting angle α (see FIG. 3). Generally, the cutting angle is not aggressive. According to an exemplary embodiment, the cutting angle of the dental bur 110 is between negative twenty degrees and positive twenty degrees. Particularly, the cutting angle may range between generally positive ten degrees to generally negative ten degrees. More particularly, the cutting angle may range between generally positive five degrees to generally negative five degrees. Although, according to an exemplary embodiment, the cutting angle is generally zero degrees. However, it will be appreciated that the cutting angle, rake and clearance angles, and depth of the channels 134, may vary depending on the specific function. In any case, the head 112 does not slice, cut, drill, or otherwise damage the implant tooth or gingival tissue. The head 112 proximally transitions to a tip 138 from the protrusions 128 and channels 134. Similar to the edge 130, the tip 138 is generally free of aggressive cutting angles prone to cut, slice, drill, or otherwise damage the implant tooth or gingival tissue. Accordingly, the tip 138 is generally rounded and smooth as it transitions toward the remainder of the head 112.

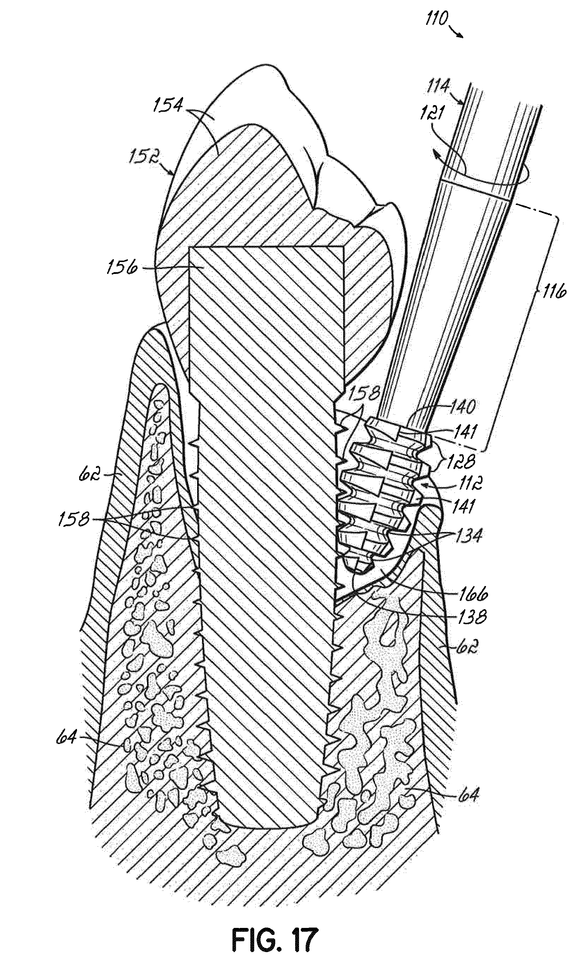

The dental bur 110, according to an exemplary embodiment, includes the tip 138, five annular protrusions 128, and five channels 134. The head 112 includes the tip 138 and a base 140, which is also the most proximally positioned protrusion 128. Each protrusion 128 and channel 134 is generally annular about the head 112 and aligned to be generally transverse to the longitudinal direction of the head 112. However, the protrusions 128 and channels 134 are positioned to alternate longitudinally along the head 112 from the tip 138 to the base 140. The plurality of channels 134 also include a plurality of notches 141 that are each linearly positioned to align longitudinally along the head 112. Thereby, the fluids, biofilm, and other soft deposits created during use may be forced along the head 112 to expel proximally from the base 140. Furthermore, the plurality of notches 141 provides clearance for moving the head 112 against the implant tooth. The head 112 is generally barrel-shaped such that the head 112 tapers toward both the tip 138 and the base 140. However, it will be appreciated that various shapes may be used to define the overall shape of the head 112 depending on the application. For example, the head 112 may, in the alternative, be generally conical, concave, or convex. Generally, though, the head 112 may be any appropriate size adapted to insert into a periodontal pocket 66 (see FIG. 17) without surgery. Thus, according to an exemplary embodiment, the head 112 has an outermost diameter of generally less than 2.5 mm. With respect to the barrel-shape, the head 112 has an outermost diameter between 0.5 mm and 2.5 mm. More particularly, the outermost diameter of the head 112 is about 2.0 mm with the tip 138 having an approximate diameter of generally 0.8 mm and the base 140 having an approximate diameter of generally 1.4 mm.

The dental bur 110 is formed from a plastic material configured to have sufficient hardness to break up and remove soft deposits, such as biofilm, but deflect and/or wear upon impact with the implant tooth. As described herein, the plastic material of dental bur 110 is like that of the dental bur 10, as shown in FIG. 1. Thus, the above description of the plastic material with respect to dental bur 10 applies in full to that of dental bur 110.

FIG. 10 shows an optional fluid conduit 142. The fluid conduit 142 extends longitudinally within the dental bur 110 from the proximal end portion 118 of the shank 114 to the head 112. First and second inlets 144, 146 extend transversely to the fluid conduit 142 within the shank 114, while first and second outlets 148, 150 extend transversely to the fluid conduit 142 within the head 112. The inlets 144, 146 are in fluid communication with the outlets 148, 150 for delivering fluid to the site of treatment at the head 112. The inlets 144, 146 are fluidly connected to the rotary device 20 (see FIG. 7) or another device for delivering fluid to the dental bur 110 via a right angle attachment (not shown). Examples of fluids that may be delivered to the treatment site via the fluid conduit 142 include physiologic or bacteriostatic solutions for immediate and/or simultaneous cleaning of the removed soft deposits. In addition to or alternatively, the dental bur 110 may also be used with an implant paste for cleaning and polishing presently manufactured by Sybron Dental Specialties Inc.

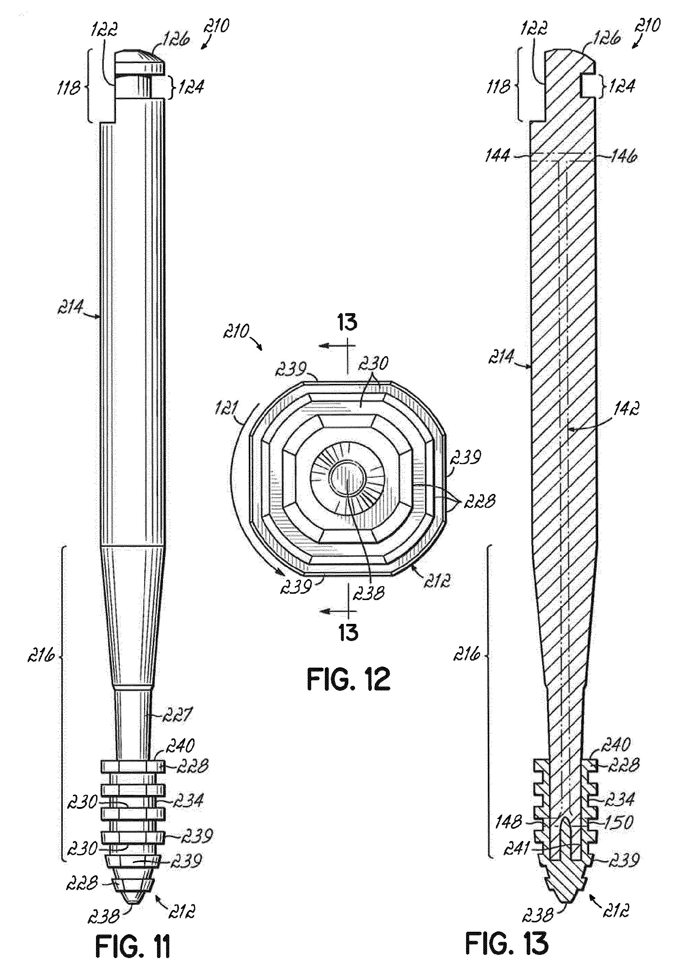

With respect to FIGS. 11 and 12, a third embodiment of a dental bur 210 is shown for removing a soft deposit, such as a biofilm, from a tooth. The biofilm is particularly removed from a subgingival area of an implant tooth without generally damaging a surface of the implant tooth. The dental bur 210 includes a head 212 extending from a shank 214. According to an exemplary embodiment, the head 212 is rigidly formed onto the shank 214 by way of an overmolding process. As such, dental bur 210 is a unitary dental bur 210 formed from a plurality of plastic materials, which will be described below in greater detail. However, it will be appreciated that the dental bur 210 may also be formed from two or more pieces assembled into the dental bur 210, for example, the head 212 may be rigidly connected to the shank 214. In any case, the shank 214 has a distal end portion 216 adjacent to the head 212 and a proximal end portion 118. The proximal end portion 118 is adapted for being connected to the rotary device 20 (see FIG. 7) for removing soft deposits.

The distal end portion 216 of the shank 214 tapers toward the head 212. In addition, the distal end portion 216 also includes a mandrel portion 227. According to an exemplary embodiment, the head 212 extends directly from the mandrel portion 227, which has a diameter generally smaller than the remainder of the shank 214. As such, the mandrel portion 227 is resilient and generally more flexible than the remainder of the shank 214 for bending to accommodate various angles of use. Of course, after use, the mandrel portion 227 and head 212 resiliently return to the longitudinal position aligning with the remainder of the shank 214. Furthermore, the head 212, generally includes a plurality of protrusions 228 positioned along the head 212. More particularly, each protrusion 228 includes at least one edge 230. Furthermore, the plurality of protrusions 228 define a plurality of channels 234. Each channel 234 is positioned between a pair of the protrusions 228 adjacent to the edge 230. According to an exemplary embodiment, each of the protrusions 228 includes a pair of opposing edges 230.

Generally, the plurality of protrusions 228 and plurality of channels 234 have a cutting angle extending along the edge 230 similar to that of cutting angle α (see FIG. 3) and described above. In this respect, the cutting angle is not aggressive, and it will be similarly appreciated that the cutting angle, rake and clearance angles, and depth of the channels 234, may vary depending on the specific function of the dental bur 210. In any case, the head 212 does not slice, cut, drill, or otherwise damage the implant tooth or gingival tissue. The head 212 proximally transitions to a tip 238 from the protrusions 228 and channels 234. Similar to the edge 230, the tip 238 is generally free of aggressive cutting angles prone to cut, slice, drill, or otherwise damage the implant tooth or gingival tissue. Accordingly, the tip 238 is generally rounded and smooth as it transitions toward the remainder of the head 212.

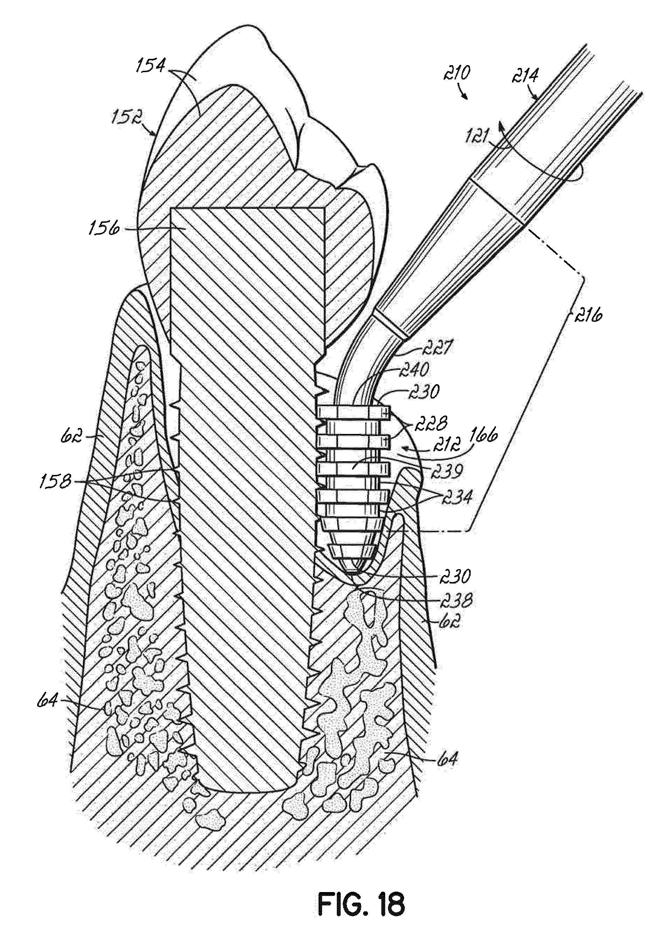

The dental bur 210, according to an exemplary embodiment, includes the tip 238, six discrete annular protrusions 228, and five discrete channels 234. The head 212 includes the tip 238 and a base 240, which is also the most proximally positioned protrusion 228. Each protrusion 228 and channel 234 is generally annular about the head 212 and aligned to be generally transverse to the longitudinal direction of the head 212. Additionally, the protrusions 228 and channels 234 are positioned to alternate longitudinally along the head 212 from the tip 238 to the base 240. Each of the channels 234 and protrusions 228 rings transversely about the head 212, but is generally planar in the longitudinal direction along the head 212. More particularly and according to an exemplary embodiment, the protrusions 228 and channels 234 are generally orthogonal to the longitudinal direction of the head 212. The head 212 also includes a plurality of flattened surfaces 239 along each of the protrusions 228 for improved removal and radial pumping of soft deposits during use. The flattened surfaces 239 are each evenly spaced about the protrusions 228 into longitudinally aligned rows along the head 212. According to an exemplary embodiment, each of the protrusions 228 includes four flattened surfaces 239 that longitudinally align into four rows along the head 212. In this respect, the head 212 is generally cylindrical in shape, but for the flattened surfaces 239 and the distal tapering toward the tip 238. However, it will be appreciated that various shapes may be used to define the overall shape of the head 212 depending on the application. Generally, though, the head 212 may be any appropriate size adapted to insert into a periodontal pocket 66 (see FIG. 18) without surgery. Thus, according to an exemplary embodiment, the head 212 has an outermost diameter of generally less than 2.5 mm. With respect to the generally cylindrical shape that tapers toward the tip 238, the head 212 has an outermost diameter between 0.5 mm and 2.5 mm. More particularly, the outermost diameter of the head 212 is about 2.0 mm with the tip 238 having an approximate diameter of generally 0.8 mm and the base 240 having an approximate diameter of generally 2.0 mm.

FIG. 13 shows the head 212 overmolded onto the mandrel portion 227 of the shank 214. The mandrel portion 227 includes a slot 241 extending distally therethrough for improved adhesion between the head 212 and the mandrel portion 227 to form the unitary dental bur 210. The head 212 of the dental bur 210 is formed from a plastic material configured to have sufficient hardness to break up and remove soft deposits, such as biofilm, but deflect and/or wear upon impact with the implant tooth. As such, the head 212 is manufactured of a softer material, and the shank 214 is manufactured from a harder material. According to an exemplary embodiment of the head 212, the softer material may be a medical grade thermoplastic elastomer (TPE) that may be used in injection overmolding. The softer material also has a material hardness between 30 Shore A and 90 Shore A and an elongation at break of generally 300% or greater. More particularly, the softer material may be a compound of ethylene propylene diene monomer (EPDM) rubber and polypropylene, such as SANTOPRENE®, which is available from ExxonMobil. Further, suitable plastics of the softer material may be filled with active components, such as antibacterial substances as described above. With respect to an exemplary embodiment of the shank 214, the harder material may be a sterolithographic resin, i.e., a photopolymer curable by ultraviolet radiation, and has an elongation at yield of generally 3% or greater, an elongation at break of generally 15%, a tensile strength at break of generally 50 MPa or greater, and an elastic modulus of generally 1500 MPa or greater. Suitable plastics may include those that are medical grade and usable in stereolithography. The material of the shank 214 needs to have good adhesion with an overmolded SANTOPRENE® head 212, and because SANTOPRENE® is based on EPDM/PP, PP is an exemplary material for the shank 214.

Furthermore, the dental bur 210 may include an optional fluid conduit 142. The fluid conduit 142 extends longitudinally within the dental bur 210 from the proximal end portion 118 of the shank 214 to the head 212 for delivering fluids to the treatment site as described above in greater detail.

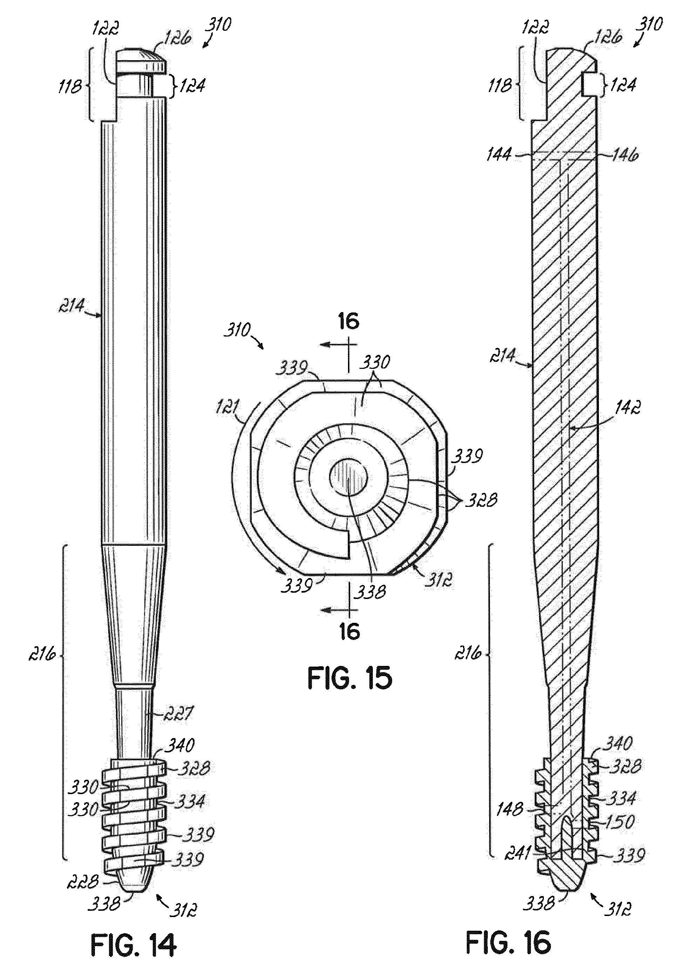

With respect to FIGS. 14 and 15, a fourth embodiment of a dental bur 310 is shown for removing a soft deposit, such as a biofilm, from a tooth. The biofilm is particularly removed from a subgingival area of an implant tooth without generally damaging a surface of the implant tooth. The dental bur 310 includes a head 312 extending from the shank 214. According to an exemplary embodiment, the head 312 is rigidly formed onto the shank 214 by way of an overmolding process. As such, dental bur 310 is a unitary dental bur 310 formed from a plurality of plastic materials similar to dental bur 210 described in FIGS. 11-13 in greater detail. In any case, the shank 214 has a distal end portion 216 adjacent to the head 312 and a proximal end portion 118. The proximal end portion 118 is adapted for being connected to the rotary device 20 (see FIG. 7) for removing soft deposits. Similarly, the distal end portion 216 adheres to the head 312. Accordingly, like numbers indicate like features described above.

The head 312 generally includes a protrusion 328 positioned along the head 312. More particularly, the protrusion 328 spirals about the head 312 and includes a pair of edges 330. By spiraling about the head 312, the protrusion 328 defines the channel 334. The channel 334 is positioned between portions of the spiraling protrusion 328 and, as such, similarly spirals about the head 312 adjacent to the edge 330. According to an exemplary embodiment, the protrusion 328 is one continuous spiral defining one continuous channel 334.

Generally, the protrusion 328 and channel 334 have a cutting angle extending along the edge 330 similar to that of cutting angle α (see FIG. 3) and described above. In this respect, the cutting angle is not aggressive, and it will be similarly appreciated that the cutting angle, rake and clearance angles, and depth of the channel 334, may vary depending on the specific function of the dental bur 310. In any case, the head 312 does not slice, cut, drill, or otherwise damage the implant tooth or gingival tissue. The head 312 proximally transitions to a tip 338 from the protrusion 328 and channel 334. Similar to the edge 330, the tip 338 is generally free of aggressive cutting angles prone to cut, slice, drill, or otherwise damage the implant tooth or gingival tissue. Accordingly, the tip 338 is generally rounded and smooth as it transitions toward the remainder of the head 312.

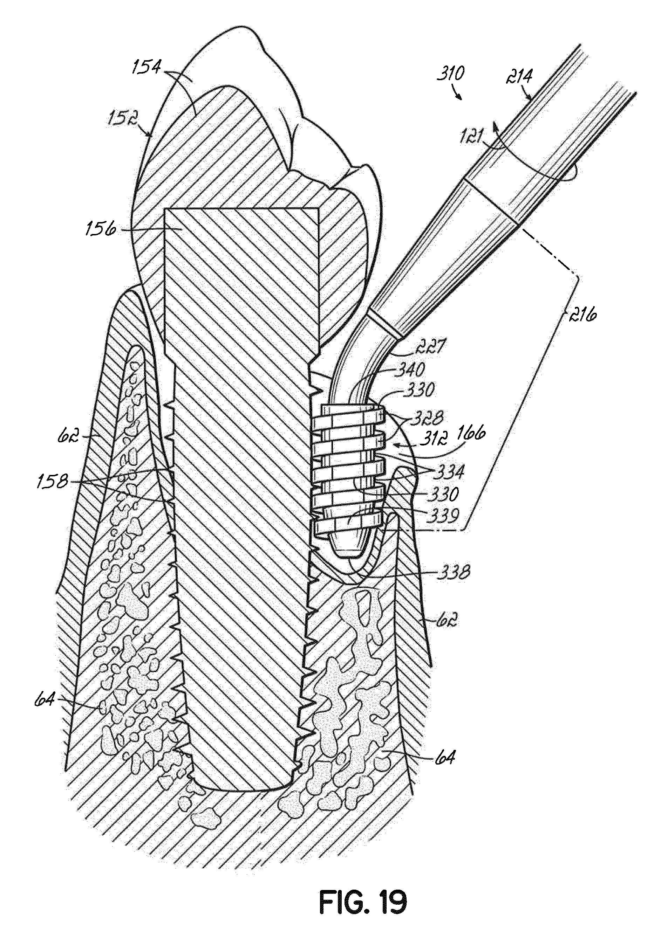

The head 312 includes the tip 338 and a base 340, which is a proximal end of the head 312. According to an exemplary embodiment, the protrusion 328 spirals about at least a portion of the head 312 between the tip 338 and the base 340. More particularly, the protrusion 328 spirals about the head 312 from the tip 338 to the base 340. The protrusion 328 and channel 334 are generally more transversely aligned along the head than longitudinally aligned. In this respect, the protrusion 328 annularly spirals about the head 312 approximately six times and is generally evenly spaced along the head 312. Thus, the protrusion 328 and channel 334 alternate longitudinally along the head 312 from the tip 338 to the base 340. The head 312 also includes a plurality of flattened surfaces 339 along the spiraling protrusion 328 for improved removal and radial pumping of soft deposits during use. The flattened surfaces 339 are each evenly spaced about the spiraling protrusion 328 into longitudinally aligned rows along the head 312. According to an exemplary embodiment, each spiral of the protrusion 328 about the head 312 includes four flattened surfaces 339 that longitudinally align into four rows along the head 312. In this respect, the head 312 is generally cylindrical in shape, but for the flattened surfaces 339 and the distal tapering toward tip 338. However, it will be appreciated that various shapes may be used to define the overall shape of the head 312 depending on the application. Generally, though, the head 312 may be any appropriate size adapted to insert into a periodontal pocket 66 (see FIG. 19) without surgery. Thus, according to an exemplary embodiment, the head 312 has an outermost diameter of generally less than 2.5 mm. With respect to the generally cylindrical shape that tapers toward the tip 338, the head 312 has an outermost diameter between 0.5 mm and 2.5 mm. More particularly, the outermost diameter of the head 312 is about 2.0 mm with the tip 338 having an approximate diameter of generally 0.8 mm.

FIG. 16 shows the head 312 overmolded onto the mandrel portion 227 of the shank 214. Generally, the head 312 adheres to the shank 214 similar to the head 212 of FIG. 13. The softer and harder materials of the head 312 and shank 214, respectively, are also similar for overmolding the head 312 to the mandrel portion 227.

FIGS. 17-19 show various embodiments of the dental bur 110, 210, 310 for use with an implant tooth 152. With respect to FIG. 17, a cross-section of the implant tooth 152 shows an artificial tooth portion 154, and a threaded fastener portion 156. The threaded fastener portion 156 is rooted in gingival tissues such as gum 62 and bone 64. Furthermore, the gum 62 may be pulled away from the threaded fastener portion 156 to reveal the subgingival area, such as the periodontal pocket 166 between the implant tooth 152 and gum 62. In use, the tip 138 of the second embodiment of the dental bur 110 is inserted into the periodontal pocket 166 and positioned against the threaded fastener portion 156 without surgery. The dental bur 110, more particularly the head 112, is rotated within the periodontal pocket 166 against the implant tooth 152. The threaded fastener portion 156 has a screw thread 158 of any desirable crest and pitch for use in mounting the implant tooth 152. Thus, the plurality of annular channels 134 are sized and positioned between the plurality of protrusions 128 for accommodating the screw thread 158.

While rotating, the channels 134 of the head 112 engage the screw thread 158 so that the dental bur 110 rotates between the screw thread 158 of the threaded fastener portion 156 and into the periodontal pocket 166. In doing so, the head 112 impacts the soft deposits, including the biofilm, breaks apart the soft deposits on the implant tooth 152, and removes the soft deposits from the entirety of the implant tooth 152. However, as the head 112 impacts the implant tooth 152, the material of the head 112 deflects and/or wears so to preserve the implant tooth 152. Furthermore, the distal end portion 116 of the shank 114 is tapered for improving access and movement of the head 112 within the periodontal pocket 166.

In one embodiment, the dental bur 110 may also include the fluid conduit 142 (see FIG. 10). In this case, the fluid is flushed through the dental bur 110 and into the periodontal pocket 166 to further treat and remove the biofilm and other soft deposits. In any case, the biofilm, other soft deposits and fluid associated with the treatment are moved proximally along the head 112, through the plurality of channels 134, and expelled from the periodontal pocket 166. Finally, the dental bur 110 is moved and rotated around the implant tooth 152 throughout the periodontal pocket 166 as needed to remove the biofilm and other soft deposits. This treatment may be repeated periodically over days, weeks, or months to treat and prevent infection and tissue inflammation associated with the buildup of soft deposits with minimal pain and sensitivity to the patient.

For other embodiments of the dental bur 210, 310, each embodiment of the head 212, 312 functions substantially similar to the embodiment of the dental bur 110 having the head 112 described above. However, as shown in FIG. 17, the plurality of notches 141 rotate against the threaded fastener portion 156 to allow fluids, biofilm, and other soft deposits created during use to pass therethrough. Accordingly, the plurality of protrusions 128 and plurality of channels 134 force the soft deposits through the plurality of notches 141 and along the head 112 to expel the soft deposits from the periodontal pocket 166.

In contrast and with respect to FIGS. 18 and 19, the plurality of flattened surfaces 239, 339 along the plurality of discrete protrusions 228 and the continuous protrusion 328 produce a radial pumping effect for expelling soft deposits from the periodontal pocket 166. Furthermore, the mandrel portion 227 is adapted to bend to further improve access and movement of the head 212, 312 within the periodontal pocket 166. For example, the rotary device 20 (see FIG. 7) with the shank 214 extending therefrom may be operated at a greater number of angles than would otherwise be possible with the shank 114 shown in FIG. 17.

Finally, the embodiments of the head 112, 212 shown in FIGS. 17 and 18 have a plurality of discrete protrusions 128, 228 and channels 134, 234. Thus, the practitioner moves the rotating head 112, 212 longitudinally along the threaded fastener portion 156 in order to engage and disengage the channels 134, 234 with the screw thread 158. However, the embodiment of the head 312 shown in FIG. 19 has a continuous protrusion 328 and channel 334 that spiral about the head 312 with pitch that generally accommodates the pitch of the screw thread 158. As such, the practitioner may hold the rotating head 312 in one position against the threaded fastener portion 156 while the continuous channel 334 rotatably spirals to engage and disengage the screw thread 158.

As described herein, the dental bur for non-surgical removal of soft deposits from the tooth adjacent to the periodontal pocket comprises the shank and the head. The shank has the proximal end portion and the distal end portion. The proximal end portion of the shank is adapted to be connected to the rotary device for rotating the shank. The head extends from the distal end portion of the shank. The head is sized for insertion into the periodontal pocket without surgery. In addition, the head has material hardness adapted to remove the soft deposits when the head is rotatably driven, but deflect and/or wear upon impact with the tooth for preventing damage to the tooth.

The head also includes the protrusion positioned along the head and defining the channel. The protrusion has the edge adapted for engaging the tooth. The dental bur may further include the fluid conduit extending through at least a portion of the head. The fluid conduit is adapted for dispensing fluid from the head for flushing the tooth and the periodontal pocket free of the removed soft deposit. The distal end portion of the shank is tapered toward the head for improving access within the periodontal pocket. Furthermore, the diameter of the head is generally less than 2.5 mm.

The dental bur may be adapted for use with the natural tooth. Thus, the material hardness of the head is adapted for the natural tooth. The head has the tip distally positioned from the shank and the plurality of protrusions define a plurality of helical flutes. The helical flutes are positioned between the protrusions and twisted about the head proximally from the tip. The head is generally tapered from the shank toward the tip.

The dental bur may be adapted for use with the implant tooth having the screw thread with the crest and pitch. Thus, the material hardness of the head is adapted for the implant tooth. In one exemplary embodiment, the head is plastic with a material hardness between Rockwell R 70 and Rockwell R 130. In another exemplary embodiment, the head is plastic with a material hardness between 30 Shore A and 90 Shore A.

The dental bur for non-surgical removal of the soft deposit from the dental implant tooth having the screw thread adjacent to the periodontal pocket comprises the shank and the head. The shank has the proximal end portion and the distal end portion. The proximal end portion is adapted to be connected to the rotary device. The head extends from the distal end portion of the shank. The head has the tip that is generally rounded and distally positioned from the shank. The head also has the protrusion defining the channel extending along the head. Furthermore, the head has material hardness adapted for removing the soft deposit from the implant tooth when the implant tooth is rotatably driven, but deflect and/or wear upon impact with the implant tooth for preventing damage to the tooth.

According to an exemplary embodiment the protrusion is a continuous protrusion and the dental bur further includes a generally rounded tip distally positioned from the shank. As such, the continuous protrusion spirals about at least a portion of the head. In another exemplary embodiment, the protrusion is an annular protrusion and the dental bur further includes a plurality of the annular protrusions and a generally rounded tip distally positioned from the shank. As such, the plurality of annular protrusions are positioned generally transverse to the longitudinally extending head.

In order to non-surgically remove the soft deposit from the tooth adjacent to the periodontal pocket, the dental bur is rotated and inserted into the periodontal pocket without surgery. The dental bur, while rotating, impacts the soft deposit to separate the soft deposit from the tooth. However, the dental bur also deflects and/or wears against the tooth for preventing damage to the tooth. The dental bur also contacts the tooth and periodontal pocket without damaging the tooth and periodontal pocket. Furthermore, the dental bur is plastic material that wears against the tooth while rotating. As the plastic material wears onto the tooth, the plastic material releases prophylactic agent on the tooth. In the event that the tooth is the implant tooth with the screw thread, at least a portion of the dental bur is rotated between the screw thread.

While the present invention has been illustrated by the description of one or more embodiments thereof, and while the embodiments have been described in considerable detail, additional advantages and modifications will readily appear to those skilled in the art. The various features shown and described herein may be used alone or in any combination.

## Claims

1. A dental bur for non-surgical removal of a soft deposit from a tooth adjacent to a periodontal pocket, comprising:
a shank having a proximal end portion and a distal end portion, the proximal end portion adapted to be connected to a rotary device for rotating the shank; and
a head extending from the distal end portion of the shank, the head being sized for insertion into the periodontal pocket without surgery;
wherein the head has a material hardness adapted to remove the soft deposit from the tooth when the head is rotatably driven but deflect and/or wear upon impact with the tooth for preventing damage to the tooth.

2. A dental bur according to claim 1, wherein the head includes a protrusion positioned along the head and defining a channel, the protrusion having an edge adapted for engaging the tooth.

3. A dental bur according to claim 1 or 2, further including a fluid conduit, the fluid conduit extending through at least a portion of the head and adapted for dispensing fluid from the head for flushing the tooth and the periodontal pocket free of the removed soft deposit.

4. A dental bur according to any of claims 1 to 3, wherein the distal end portion of the shank is tapered toward the head for improving access within the periodontal pocket.

5. A dental bur according to any of the preceding claims, wherein the head has a diameter generally less than 2.5 mm for non-surgical insertion into the periodontal pocket.

6. A dental bur according to any of the preceding claims, wherein the material hardness of the head is adapted for the tooth being a natural tooth.

7. A dental bur according to claim 6, wherein the head further includes a generally rounded tip distally positioned from the shank and a plurality of helical flutes, the plurality of helical flutes defined by the plurality of protrusions, the plurality of the protrusions and the plurality of the flutes twisted about the head proximally from the tip.

8. A dental bur according to claim 6, wherein the head has a tip distally positioned from the shank, the head being generally tapered from the shank toward the tip.

9. A dental bur according to any of the preceding claims, wherein the tooth is an implant tooth, the material hardness of the head adapted for the implant tooth.

10. A dental bur according to any of the preceding claims, wherein the head is plastic.

11. A dental bur according to any of the preceding claims, wherein the material hardness of the head is between Rockwell R 70 and Rockwell R 130.

12. A dental bur according to any of the preceding claims wherein the material hardness of the head is between 30 Shore A and 90 Shore A.

13. A dental bur for non-surgical removal of a soft deposit from a dental implant tooth, the implant tooth having a screw thread adjacent to a periodontal pocket, the dental bur, comprising:
a shank having a proximal end portion and a distal end portion, the proximal end portion adapted to be connected to a rotary device for rotating the shank; and
a head extending from the distal end portion of the shank, the head having a generally rounded tip distally positioned from the shank and a protrusion, the protrusion defining a channel extending along the head;
wherein the head has a material hardness adapted to remove the soft deposit from the implant tooth when the head is rotatably driven but deflect and/or wear upon impact with the implant tooth for preventing damage to the implant tooth.

14. A dental bur according to claim 13, wherein the protrusion is a continuous protrusion and the dental bur further includes a generally rounded tip distally positioned from the shank, the continuous protrusion spiraling about at least a portion of the head.

15. A dental bur according to claim 13, wherein the protrusion is an annular protrusion and the dental bur further includes a plurality of the annular protrusions and a generally rounded tip distally positioned from the shank, the plurality of annular protrusions positioned generally transverse to the longitudinally extending head.
